# EUROPÄISCHE PATENTSCHRIFT

(11) **EP 2 533 976 B1**
(45) Veröffentlichungstag und Bekanntmachung des Hinweises auf die Patenterteilung: **27.05.2015**
(21) Anmeldenummer: 11702251.7
(22) Anmeldetag: 08.02.2011
(51) Int. Cl.: B32B 13/00, C04B 14/02, C04B 28/14, E04C 2/04

(54) **GIPSKARTONPLATTE UND EIN VERFAHREN ZUR HERSTELLUNG EINER GIPSKARTONPLATTE**
Gypsum board and method for manufacturing same
Plaque de Placoplatre et un procédé de fabrication d'une plaque de Placoplatre

(30) Priorität: 08.02.2010 EP 10152909
(43) Veröffentlichungstag der Anmeldung: 19.12.2012
(73) Patentinhaber: Knauf Gips KG, 97346 Iphofen (DE)
(72) Erfinder: HUMMEL, Hans-Ulrich, 97346 Iphofen (DE); SCHELLER, Lothar, 97346 Iphofen (DE); STICH, Dietmar, 97348 Willanzheim (DE)
(74) Vertreter: Von Kreisler Selting Werner - Partnerschaft von Patentanwälten und Rechtsanwälten mbB
(86) Internationale Anmeldenummer: PCT/EP2011/051801
(87) Internationale Veröffentlichungsnummer: WO 2011/095634

(56) Entgegenhaltungen:
- WO-A1-2006/016200

## Beschreibung

Gegenstand der vorliegenden Erfindung ist eine Gipskartonplatte und ein Verfahren zur Herstellung einer Gipskartonplatte.

Die Herstellung von Gipskartonplatten ist lange bekannt. Sie ist beispielsweise beschrieben im US Patent 4,009,062. In üblicher Weise wird ein mit Wasser angerührter Gipsbrei, enthaltend eine abbindefähige Calciumsulfatphase auf eine Kartonbahn kontinuierlich aufgetragen und mit einem zweiten Karton abgedeckt. Die beiden Kartonbahnen werden als Sicht- bzw. Rückseitenkarton bezeichnet.

Der Plattenstrang bewegt sich dann auf einem sogenahnten Abbindeband, wobei am Ende des Abbindebandes eine fast vollständige Umwandlung der abbindefähigen Calciumsulfatphasen in Calciumsulfat-Dihydrat stattgefunden haben muss. Nach dieser Aushärtung wird die Bahn in Platten vereinzelt und das noch in den Platten vorhandene Wasser wird in beheizten Mehretagentrocknern entfernt.

Der eingesetzte abbindefähige Gipsbrei wird typischerweise in einem Durchlaufmischer hoher Drehzahl erzeugt.

Für eine stabile Platte ist es notwendig, dass der Karton, der die Platte umgibt, fest mit dem Gipskern verbunden ist und der Gipskern eine hohe Festigkeit aufweist.

Entsprechende Gipskartonplatten werden im Innenausbau für Decken und Wände im großen Umfang verwendet.

Dem Fachmann sind auch sogenannte Lochplatten bekannt. Bei Lochplatten werden mit Hilfe von Stanzmaschinen Öffnungen - Kreise, Schlitze, Rechtecke, etc. - ausgestanzt. Diese Lochplatten werden in der Regel in Deckenkonstruktionen eingesetzt, da die so erhaltenen Decken ein hohes Maß an Schallabsorption zeigen. Üblicherweise werden hierzu Lochplatten auf eine geeignete Unterkonstruktion, typischerweise aus verzinkten Stahlprofilen montiert.

Für das Stanzen ist es erforderlich, dass der Plattenkern eine hohe innere Festigkeit aufweist und praktisch frei von Lufteinschlüssen ist. Außerdem muss eine gute Haftung von Sicht- und Rückseitenkarton am Gipskern gegeben sein.

Grundsätzlich müssen Gipskartonplatten möglichst leicht verschraubbar sein, dürfen aber im Profil, insbesondere bei Deckenmontage, keinen oder nur einen sehr geringen Durchhang zeigen. Dies ist insbesondere dann problematisch, wenn die Platten in Räumen mit hoher Luftfeuchtigkeit verwendet werden.

Verschiedene Varianten von Gipskartonplatten sind bekannt, beispielsweise offenbart WO 2006/016200 eine Gipsmatrix, die 1 bis 5% amorphen Kohlenstoff und 15 bis 25% Graphit in der Gipsmatrix enthält. Aufgrund des Anteils an amorphen Kohlenstoff, insbesondere in Form von Nanopartikeln, ist der Karton elektrisch leitfähig.

EP 1 749 805 A1 offenbart gipsbasierte Baustoffe umfassend kompaktiertes Graphitexpandat zur Verbesserung der thermischen Leitfähigkeit und elektromagnetischen Schirmdämpfung.

Aufgabe der vorliegenden Erfindung war es, Gipskartonplatten bereitzustellen, die verbesserte Eigenschaften aufweisen, insbesondere Platten, die eine hohe Festigkeit des Gipskerns aufweisen und eine gute Anhaftung des Kartons zeigen, da hierdurch Probleme mit dem Durchhang reduziert oder vermieden werden können.

Überraschenderweise kann die Aufgabe gelöst werden durch eine Gipskartonplatte enthaltend eine Gipsmatrix und 0,1 bis 10 Gew.-% Kohlenstoffpartikel, wobei die Partikelgröße (d50) der Kohlenstoffpartikel im Bereich von 0,5 bis 4 mm liegt und wobei die Kohlenstoffpartikel mindestens zwei verschiedene Kohlenstoffpartikel sind, die aus der Gruppe bestehend aus Graphitfolienschnipseln, expandiertem Blähgraphit, amorphem Graphit, Naturgraphit ausgewählt werden.

Gipsmatrix bezeichnet einen im Wesentlichen aus Calciumsulfat-Dihydrat bestehenden Gipskern, der weitere Inhaltsstoffe enthalten kann. Als Gipskartonplatte weist die Platte auch zwei Kartonlagen auf den Hauptflächen auf.

d50 ist die Partikelgröße, bei der 50 Gew.-% aller Kohlenstoffpartikel, die in der Matrix enthalten sind, ein Sieb einer entsprechenden Größe passieren und 50 Gew.-% zurückgehalten werden.

Überraschenderweise hat sich gezeigt, dass die Kohlenstoffpartikel homogen im Gipskern verteilt werden und trotz ihrer geringen Dichte kein oder nur ein geringes Aufschwimmen der leichten Teilchen im Gipsbrei erfolgt. Die enthaltenden Kohlenstoffteilchen führen zu einer Verbesserung der Gipskernstabilität. Da sie nicht aufschwimmen, zeigt sich überraschenderweise keine negative Beeinflussung der Kartonanhaftung.

In einer bevorzugten Ausführungsform liegt der Gehalt an Kohlenstoffpartikeln im Bereich von 5 bis 8 Gew.-% bezogen auf den trockenen Gipskern.

Als Kohlenstoffpartikel eignet sich insbesondere Graphit. Geeignet sind beispielsweise Graphitfolienschnipseln, Blähgraphit oder Mischungen davon.

Graphitfolienschnipsel sind beispielsweise von der Firma Graphit Kropfmühl AG unter der Produktbezeichnung O-SM/F erhältlich. Es handelt sich um Folien, die aus Graphit gepresst werden und hinterher geschnitten werden. Ein geeigneter d50 Wert liegt zwischen 2 und 4 mm.

Als geblähter Graphit kann beispielsweise das Produkt EGPM der Firma Graphit Kropfmühl AG verwendet werden. Blähgraphit ist ein Material, was unter Hitzeeinwirkung expandiert; dabei kann das Endvolumen ein Vielfaches des Ausgangsvolumens betragen.

Erfindungsgemäß wird der Blähgraphit bevorzugt in expandierter Form eingesetzt.

Erfindungsgemäß werden verschiedene Kohlenstoffpartikel kombiniert. Es werden mindestens zwei verschiedene, bevorzugt mindestens drei verschiedene Kohlenstoffpartikel eingesetzt. Bewährt hat zugt mindestens drei verschiedene Kohlenstoffpartikel eingesetzt. Bewährt hat sich insbesondere eine Mischung aus Graphitfolienschnipseln mit Blähgraphit oder eine Kombination von Graphitfolienschnipseln oder einer Mischung von Graphitfolienschnipsel mit Blähgraphit mit künstlichen amorphem Graphit oder Naturgraphit.

Als amorphes Graphitpulver kann beispielsweise das Produkt AM385 der Firma Graphit Kropfmühl AG eingesetzt werden. Typische Größen liegen z.B. bei < 325 µm für 91,5 Gew.-% des Pulvers.

Als Naturgraphit kann beispielsweise das Produkt FLP 90 C2-SC der Firma Kropfmühl eingesetzt werden.

Typische Mengen für die Fölienschnipseln liegen im Bereich von 1 bis 4,5 Gew.-% und für die anderen Partikel jeweils bei 1 bis 3 Gew.-%.

Soweit amorpher Graphit (künstlich oder natürlich) enthaltend ist, ist zusätzlich noch ein partikulärer Graphit enthalten.

In einer Ausführungsform der Erfindung enthält die Gipsmatrix zusätzlich 1 bis 10 Gew.-% Calciumcarbonat. Calciumcarbonat bewirkt eine Verbesserung der Verschraubbarkeit.

In einer Ausführungsform der Erfindung werden die Platten in Form von Lochplatten eingesetzt, d.h. sie werden nach der Herstellung durch Stanzen mit Schlitzen, Löchern in Form von Kreisen, Quadraten oder Rechtecken versehen.

Überraschenderweise zeigt sich, dass die erfindungsgemäßen Platten besonders gut verschraubt werden können, weil sie einen festen Gipskern aufweisen, dabei aber gleichzeitig eine sehr gute Anhaftung des Kartons zeigen.

Auch in Räumen mit hoher Luftfeuchtigkeit zeigen die erfindungsgemäßen Platten nur einen geringen Durchhang. Bei einer Prüfung bei 20°C und 90% mm in Produktionsrichtung und weniger als 5 mm quer zur Produktionsrichtung.

Die erfindungsgemäßen Platten zeigen eine gute Kernhärte. Sie liegt bevorzugt bei mehr als 150 N, bevorzugt mehr als 165 N. Ihre Wärmeleitfähigkeit ist bevorzugt > 0,4 W/mK oder > 0,45 W/mK, d.h. gegenüber einer normalen Platte erhöht.

Trotz der Anwesenheit von Kohlenstoffteilchen, insbesondere Graphit, sind die Platten elektrisch nicht leitend, d.h. der Widerstand der trockenen Platte ist bei einer angelegten Netzspannung von 500 V bzw. 1000 V > 500 MΩ. Sie weisen aber eine hohe thermische Leitfähigkeit auf.

Gegenstand der Erfindung ist auch ein Verfahren zur Herstellung der erfindungsgemäßen Gipskartonplatte mit folgenden Schritten:
- Herstellen eines abbindefähigen Gipsbreis enthaltend 0,1 bis 10 Ges.-% Kohlenstoffpartikel, wobei die Partikelgröße (d50) der Kohlenstoffpartikel im Bereich von 0,5 bis 4 mm liegt, und wobei die Kohlenstoffpartikel mindestens zwei verschiedene Kohlenstoffpartikel sind, die aus der Gruppe bestehend aus Graphitfolienschnipseln, expandiertem Blähgraphit, amorphem Graphit, Naturgraphit ausgewählt werden
- Aufbringen des Gipsbreis auf eine Kartonbahn
- Abdecken mit einer zweiten Kartonbahn
- Schneiden der Kartonbahn nach zumindest teilweisem Abbinden des Gipsbreis.

In einer Ausführungsform wird die Platte nach dem Abbinden perforiert, um eine Lochplatte zu erhalten.

In einer weiteren Ausführungsform können dem Gipsbrei 1 bis 10 Gew.-% Calciumcarbonat zugesetzt werden, wobei sich der Einsatz von feingemahlenem Calciumcarbonat besonders bewährt hat. Bevorzugt liegt die Korngröße des eingesetzten Calciumcarbonats < 300 µm.

Zur Herstellung des Gipsbreis eignen sich insbesondere Wasser und Stuckgips (CaSO₄ x 0,5H₂O). Dem Gipsbrei können weitere Hilfsmittel zugesetzt werden, insbesondere Verflüssiger, um das Wasser-Gips-Verhältnis gering zu halten.

Die Erfindung wird durch die nachfolgenden Beispiele näher erläutert.

### Beispiel 1

### Bestimmung der Kernhärte

Aus einer Gipsplatte bei 40°C wird ein 300 mm breiter Streifen über die Plattenbreite herausgeschnitten und auf eine Stahlplatte mit 10 mm dicke und einer Bohrung aufgelegt. Ein 40 mm langer und 2,1 bis 2,4 mm dicker, angespitzter Stahlnagel wird mit einer Geschwindigkeit von 200 mm pro Minute von der Sichtseite zur Rückseite durch die Platte gedrückt, bis er auf der Plattenrückseite ausgetreten ist. Es wird der maximal auftretende Gegenwiderstand angegeben, wobei der Mittelwert über mindestens sechs Messpunkte der Platte angegeben wird.

### Beispiel 2

### Durchhangtest

Zum Durchhangtest wird eine 12,5 mm starke Platte vorsichtig in mehrere Längs- und Querstreifen vom Format 100 * 670 mm mit einer Präzisionskreissäge geschnitten. Die Probestücke werden bei 40°C bis zur Gewichtskönstanz getrocknet. Dabei erfolgt die Lagerung auf der Längsschnittkante. Auf einer Prüfkörperablage mit einem Abstand von 600 mm werden die Probekörper aufgelegt und der Durchhang mit einer Genauigkeit von 0,01 mm gemessen (Ausgangsdurchhang). Anschließend werden die Probekörper für 7 Tage in einem Klimaschrank bei +20°C +/- 1°C und 90% +/- 1% relativer Luftfeuchtigkeit auf einen Gestell mit einem Auflageabstand von 60mm Fläche mit der Sichtseite nach unten gelagert. Der Durchhang ergibt sich aus dem anschließend gemessenen Durchhang abzüglich des Ausgangsdurchhangs.

### Beispiel 3

Es wurde ein Gipsbrei hergestellt mit folgender Zusammensetzung

| | |
|---|---|
| 127,55 g | Stuckgips |
| 90,00 g | Wasser |
| 0,45 g | Verflüssiger |
| 10,00 g | CaCO₃ |
| 7,50 g | Graphitfolienschnipseln O/SMF |
| 1,50 g | Blähgraphit EGMP |
| 3 g | FLP-Graphit |

Diese wurden in üblicher Weise auf eine Kartonbahn aufgebracht und mit einer Kartonbahn abgedeckt. Nach Aushärtung ergaben sich folgende Werte:

| | |
|---|---|
| Nenndicke: | 10 mm |
| Flächenqewicht: | 10,40 kg/m² bei 40°C |
| Rohdichte: | 1049 kg/m³ |
| Ausqleichsfeuchte: | 0,11% |
| Bruchlasten gemäß EN 520 bei 40°C: | Ø 636 N SS längs |
| | Ø 272 N RS quer |
| Spez. Biegezugfestigkeiten nach EN 520 bis 40°C: | Ø 11,36 SS längs |
| | Ø 4,83 RS quer |
| E-Modul nach EN 520 bei 40°C: | Ø 6843 N/mm² SS längs |
| | 0 5091 N/mm² RS quer |
| Durchhangsprüfung 20°C/90% | 2,82 mm Produktionsrichtung |
| | 4,04 mm quer zur Produktionsrichtung |
| Rel. Luftfeuchte: | |
| Kernhärte/Ametek: | Ø 176 N |
| Wärmeteitfähigkeit: | Ø 0,47W/mk |
| Elektrische Leitfähigkeit: | Isolator (> 500 MΩ bei 500 V, nach VDE) |

## Patentansprüche

1. Gipskartonplatte enthaltend eine Gipsmatrix und 0,1 bis 10 Gew.-% Kohlenstoffpartikel, wobei die Partikelgröße (d50) der Kohlenstoffpartikel im Bereich von 0,5 bis 4 mm liegt, und wobei die Kohlenstoffpartikel mindestens zwei verschiedene Kohlenstoffpartikel sind, die aus der Gruppe bestehend aus Graphitfolienschnipseln, expandiertem Blähgraphit, amorphem Graphit, Naturgraphit ausgewählt werden.

2. Gipskartonplatte nach Anspruch 1, wobei der Gehalt an Kohlenstoffpartikein im Bereich von 5 bis 8 Gew.-% liegt.

3. Gipskartonplatte nach einem der Ansprüche 1 bis 2, **dadurch gekennzeichnet, dass** die Partikelgröße der Kohlenstoffpartikel (d50) im Bereich von 1 bis 3 mm liegt.

4. Gipskartonplatte nach mindestens einem der Ansprüche 1 bis 3, **dadurch gekennzeichnet, dass** die Gipsmatrix zusätzlich 1 bis 10 Gew.-% Calciumcarbonat enthält.

5. Gipskartonplatte nach mindestens einem der Ansprüche 1 bis 4, **dadurch gekennzeichnet, dass** die Platte stanzbar ist.

6. Verfahren zur Herstellung einer Gipskartonplatte nach mindestens einem der Ansprüche 1 bis 5 mit folgenden Schritten:
- Herstellen eines abbindefähigen Gipsbreis enthaltend 0,1 bis 10 Gew.-% Kohlenstoffpartikel, wobei die Partikelgröße (d50) der Kohlenstoffpartikel im Bereich von 0,5 bis 4 mm liegt, und wobei die Kohlenstoffpartikel mindestens zwei verschiedene Kohlenstoffpartikel sind, die aus der Gruppe bestehend aus Graphitfolienschnipseln, expandiertem Blähgraphit, amorphem Graphit, Naturgraphit ausgewählt werden
- Aufbringen des Gipsbreis auf eine Kartonbahn
- Abdecken mit einer zweiten Kartonbahn
- Schneiden der Kartonbahn nach zumindest teilweisem Abbinden des Gipsbreis.

7. Verfahren zur Herstellung einer Gipskartonplatte gemäß Anspruch 6, wobei eine oder zwei der eingesetzten Kartonbahnen aus leitfähigem Karton bestehen.

8. Verfahren nach Anspruch 6, **dadurch gekennzeichnet, dass** die Platte nach dem Abbinden perforiert wird, um eine Lochplatte zu erhalten.

9. Verfahren nach Anspruch 6 oder 7, wobei dem Gipsbrei 1 bis 10 Gew.-% Calciumcarbonat zugesetzt werden.

10. Verfahren nach einem der Ansprüche 6 bis 9, **dadurch gekennzeichnet, dass** für die Herstellung des Gipsbreis Wasser und Stuckgips verwendet werden.

11. Verfahren nach einem der Ansprüche 6 bis 10, dadurch gekenntzeichnet, dass übliche Hilfsmittel, insbesondere Verflüssiger, zugesetzt werden.

## Claims

1. A gypsum plaster board comprising a gypsum matrix and from 0.1 to 10% by weight of carbon particles, wherein the particle size (d50) of the carbon particles is within a range of from 0.5 to 4 mm, and wherein said carbon particles are at least two different carbon particles selected from the group consisting of scraps of graphite foil, expanded graphite, amorphous graphite, natural graphite.

2. The gypsum plaster board according to claim 1, wherein the content of carbon particles is within a range of from 5 to 8% by weight.

3. The gypsum plaster board according to claim 1 or 2, **characterized in that** the particle size of the carbon particles (d50) of the carbon particles is within a range of from 1 to 3 mm.

4. The gypsum plaster board according to at least one of claims 1 to 3, **characterized in that** the gypsum matrix additionally contains from 1 to 10% by weight of calcium carbonate.

5. The gypsum plaster board according to at least one of claims 1 to 4, **characterized in that** said board is stampable.

6. A process for preparing a gypsum plaster board according to at least one of claims 1 to 5, comprising the following steps:
- preparing a settable gypsum slurry comprising from 0.1 to 10% by weight of carbon particles, wherein the particle size (d50) of the carbon particles is within a range of from 0.5 to 4 mm, and wherein said carbon particles are at least two different carbon particles selected from the group consisting of scraps of graphite foil, expanded graphite, amorphous graphite, natural graphite;
- applying said gypsum slurry to a cardboard sheet;
- covering the slurry with a second cardboard sheet;
- cutting the cardboard sheet into boards after the gypsum slurry has at least partially set.

7. The process for preparing a gypsum plaster board according to claim 6, wherein one or two of the cardboard sheets employed consist of conductive cardboard.

8. The process according to claim 6, **characterized in that** said board is perforated after the setting to obtain a perforated board.

9. The process according to claim 6 or 7, wherein from 1 to 10% by weight of calcium carbonate is added to the gypsum slurry.

10. The process according to any of claims 6 to 9, **characterized in that** water and plaster of Paris are used for preparing said gypsum slurry.

11. The process according to any of claims 6 to 10, **characterized in that** usual auxiliaries, especially plasticizers, are added.

## Revendications

1. Plaque de plâtre cartonnée contenant une matrice de plâtre et de 0,1 % à 10 % en poids de particules de carbone, où la taille de particules (d50) des particules de carbone se situe dans la plage comprise entre 0,5 et 4 mm, et où les particules de carbone sont des particules de carbone d'au moins deux types différents, qui sont sélectionnées parmi le groupe se composant de petits morceaux de feuille de graphite, de graphite gonflé expansé, de graphite amorphe, de graphite naturel.

2. Plaque de plâtre cartonnée selon la revendication 1, où la teneur en particules de carbone se situe dans la plage comprise entre 5 % et 8 % en poids.

3. Plaque de plâtre cartonnée selon l'une quelconque des revendications 1 ou 2, **caractérisée en ce que** la taille des particules de carbone (d50) se situe dans la plage comprise entre 1 et 3 mm.

4. Plaque de plâtre cartonnée selon au moins l'une quelconque des revendications 1 à 3, **caractérisée en ce que** la matrice de plâtre contient en outre de 1 % à 10 % en poids de carbonate de calcium.

5. Plaque de plâtre cartonnée selon au moins l'une quelconque des revendications 1 à 4, **caractérisée en ce que** la plaque peut être découpée.

6. Procédé pour la fabrication d'une plaque de plâtre cartonnée selon au moins l'une quelconque des revendications 1 à 5, comprenant les étapes suivantes :
- fabriquer une pâte de plâtre apte à la prise, contenant de 0,1 % à 10 % en poids de particules de carbone, où la taille (d50) des particules de carbone se situe dans la plage comprise entre 0,5 et 4 mm, et où les particules de carbone sont des particules de carbone d'au moins deux types différents, qui sont sélectionnées parmi le groupe se composant de petits morceaux de feuille de graphite, de graphite gonflé expansé, de graphite amorphe, de graphite naturel,
- appliquer la pâte de plâtre sur une bande de carton,
- recouvrir avec une seconde bande de carton,
- couper la bande de carton après une prise au moins partielle de la pâte de plâtre.

7. Procédé pour la fabrication d'une plaque de plâtre cartonnée selon la revendication 6, où une ou deux des bandes de carton utilisées se composent d'un carton conducteur.

8. Procédé selon la revendication 6, **caractérisé en ce que** la plaque est perforée après la prise, pour obtenir une plaque perforée.

9. Procédé selon la revendication 6 ou 7, où une quantité comprise entre 1 % et 10 % en poids de carbonate de calcium est ajoutée à la pâte de plâtre.

10. Procédé selon l'une quelconque des revendications 6 à 9, **caractérisé en ce qu'**on utilise de l'eau et du plâtre de moulage pour la fabrication de la pâte de plâtre.

11. Procédé selon l'une quelconque des revendications 6 à 10, **caractérisé en ce qu'**on ajoute des adjuvants habituels, en particulier des fluidifiants.
